Europäisches Patentamt

European Patent Office

Office européen des brevets

(11) Veröffentlichungsnummer: **0 158 257**

**A1**

(12) **EUROPÄISCHE PATENTANMELDUNG**

(21) Anmeldenummer: **85103913.1**

(22) Anmeldetag: **01.04.85**

(51) Int. Cl.⁴: **G 06 F 12/14**

(30) Priorität: **03.04.84 DE 3412422**

(43) Veröffentlichungstag der Anmeldung:
**16.10.85 Patentblatt 85/42**

(84) Benannte Vertragsstaaten:
**CH DE GB LI NL**

(71) Anmelder: **Siemens Aktiengesellschaft
Berlin und München Wittelsbacherplatz 2
D-8000 München 2(DE)**

(72) Erfinder: **Brunner, Franz, Dipl.-Ing.
Wendelsteinstrasse 3a
D-8039 Puchheim(DE)**

(72) Erfinder: **Wurmitzer, Armin
Kainachgasse 19/5/12
A-1210 Wien(AT)**

(54) **Verfahren zum gesicherten Zugriff zu gespeicherten Datenwörtern.**

㊿ Um mehreren Benutzern einer Bilschirmtextstation einen gesicherten Zugriff zu gespeicherten Datenwörtern, wie beispielsweise persönlichen Kontonummern, Bildschirmtextseitennummern oder Codewörtern zu ermöglichen, werden den Datenwörtern einzelne Datentasten (D1 bis D14) frei zugeordnet und nach der Eingabe eines Kennworts für eine Ausgabe freigegeben. Jedem Kennwort ist ein bestimmter Satz von Datenwörtern zugeordnet, der durch die Datentasten (D1 bis D14) abrufbar ist. In der Bildschirmtextstation sind beispielsweise fünf Kennwörter speicherbar, die jeweils 28 Datenwörtern fest zugeordnet sind. Unter Verwendung von 14 Datentasten (D1 bis D14) und einer Ebenenumschalttaste sind die 28 Datenwörter nach der Eingabe des zugehörigen Kennworts ausgebbar. Die Datenwörter sind in einem batteriegepufferten Halbleiterspeicher (S2) gespeichert, so daß die Inhalte auch nach dem Abschalten der Betriebsspannung erhalten bleiben.

FIG 2

0158257

Siemens Aktiengesellschaft          Unser Zeichen
Berlin und München                  VPA 84 P 1275 E

Verfahren zum gesicherten Zugriff zu gespeicherten Datenwörtern

Die Erfindung bezieht sich auf ein Verfahren zum gesicherten Zugriff zu gespeicherten Datenwörtern entsprechend dem Oberbegriff des Patentanspruchs 1.

Es ist bereits allgemein bekannt, bestimmte Datenwörter
in einem Halbleiterspeicher gegen einen unberechtigten
Zugriff zu sichern. In Datenverarbeitungsanlagen ist es
üblich, den Datenwörtern ein bestimmtes Kennwort zuzuordnen und nur bei einer Übereinstimmung eines eingegebenen
Kennworts mit dem zugeordneten Kennwort ein Auslesen der
Datenwörter aus dem Speicher zu ermöglichen.

Bei dem neuen Telekommunikationsdienst "Bildschirmtext"
ist es vorgesehen, daß ein Benutzer nach dem Herstellen
einer Verbindung zwischen seiner Bildschirmtextstation
und einer Bildschirmtextzentrale ein bestimmtes Kennwort
eingibt, um die Zugangsberechtigung zu dem Dienst "Bildschirmtext" zu überprüfen. Im Zusammenhang mit der Teilnahme an dem Dienst "Bildschirmtext" tritt häufig der
Fall ein, daß vom Benutzer weitere Codewörter, wie beispielsweise Kontonummern bei einer Fernbuchung oder andere Benutzerkennungen eingeben muß. Außerdem ist es möglich, mittels einer Bildschirmtextstation Nummern von bestimmten Bildschirmtextseiten unmittelbar einzugeben, um
zu verhindern, daß man erst nach einer Vielzahl von übertragenen Bildschirmtextseiten zu der gewünschten Seite
gelangt, da die Seiten üblicherweise entsprechend einem

Ret 1 Fra / 2.4.1984

Suchbaum organisiert sind.

Es wurde bereits vorgeschlagen, an einer Tastatur der Bildschirmtextstation neben den üblichen alphanumerischen Tasten und Steuertasten Datentasten vorzusehen, denen die Datenwörter, wie die erwähnten Kontonummern, Codewörter oder Seitennummern von Bildschirmtextseiten einzeln zugeordnet werden. Im Bedarfsfall wird dann anstelle der Eingabe über die alphanumerische Tastatur die entsprechende Datentaste betätigt, so daß das zugeordnete Datenwort ausgelesen und zur Bildschirmtextzentrale übertragen wird.

Eine derartige Anordnung hat jedoch den Nachteil, daß persönliche Datenwörter, wie beispielsweise die Kontonummer oder ein Codewort vor einem Zugriff durch unberechtigte Personen nicht geschützt sind. Dies ist insbesondere dann ungünstig, wenn mehrere Personen teilnahmeberechtigt sind, wie dies beispielsweise bei einer kommerziellen Bildschirmtextstation im Büro der Fall sein kann.

Der Erfindung liegt daher die Aufgabe zugrunde, ein Verfahren anzugeben, das es ermöglicht, daß mehrere Personen an ein und derselben Bildschirmtextstation arbeiten und daß dennoch die persönlichen Datenwörter der verschiedenen Personen nicht ohne weiteres zugänglich sind.

Erfindungsgemäß wird die Aufgabe bei dem Verfahren der eingangs genannten Art durch die im kennzeichnenden Teil des Patentanspruchs 1 angegebenen Merkmale gelöst.

Das Verfahren gemäß der Erfindung hat den Vorteil, daß nicht jede der berechtigten Personen die jeweiligen persönlichen Datenwörter im Bedarfsfall eingeben muß, sondern daß jede Person lediglich ihr eigenes Kennwort ken-

0158257

nen muß und nach dessen Eingabe auf die gespeicherten Datenwörter zugreifen kann. Die Datenwörter sind dennoch vor einem unberechtigten Zugriff geschützt, so daß eine benutzungsberechtigte Person nicht auf die persönlichen Datenwörter einer anderen benutzungsberechtigten Person zugreifen kann.

Die jedem Kennwort zugeordneten Datenwörter werden, um die Anzahl der zugeordneten Datentasten möglich gering zu halten, in mehreren, beispielsweise zwei Ebenen den Datentasten zugeordnet. Nach dem Betätigen einer entsprechenden Ebenenumschalttaste werden die Datenwörter der jeweils anderen Ebene für eine Ausgabe freigegeben.

Bei einer bevorzugten Ausführungsform werden in der Bildschirmtextstation bis zu fünf Kennwörter gespeichert und jedem Kennwort sind bis zu 28 Datenwörter zugeordnet, wobei die 28 Datenwörter zweckmäßigerweise in zwei Ebenen zu jeweils 14 Datenwörter organisiert sind, die durch 14 Datentasten und die entsprechende Ebenenumschalttaste abrufbar sind.

Die Eingabe des Kennworts erfolgt zweckmäßigerweise mittels der alphanumerischen Tasten der Tastatur. Es ist auch möglich, das Kennwort mittels einer Steckkarte, die beispielsweise als Magnetstreifenkarte oder als eine mit einem Halbleiterspeicher versehene Chipkarte ausgebildet ist, einzugeben, wobei die Eingabe zusätzlich die Eingabe einer persönlichen Zeichenfolge mittels der alphanumerischen Tasten der Tastatur erfordert.

Die Eingabe der Datenwörter erfolgt nach der Eingabe des Kennworts und dem Betätigen der entsprechenden Datentaste mittels der alphanumerischen Tasten der Tastatur und dem

Betätigen einer Speichertaste.

Für eine Anzeige der bereits gespeicherten Datenwörter besteht einerseits die Möglichkeit, nach der Eingabe des Kennworts und nach dem Betätigen einer Anzeigetaste die Datenwörter mindestens einer Ebene an der Anzeigeeinheit darzustellen. Es ist auch möglich, in einer zusätzlichen Anzeigezeile an der Anzeigeeinheit nach der Eingabe des Kennworts und nach dem Betätigen einer Anzeigetaste und der entsprechenden Datentaste das dieser Datentaste zugeordnete Datenwort anzuzeigen. Durch die Verwendung von für die horizontale Bewegung einer Schreibmarke an der Anzeigeeinheit vorgesehenen Tasten ist es möglich, ausgehend von dem jeweils dargestellten Datenwort die den jeweils benachbarten Datentasten zugeordneten Datenwörter anzuzeigen.

Eine Durchführung des Verfahrens gemäß der Erfindung wird im folgenden anhand einer Anordnung zur Durchführung des Verfahrens näher erläutert. Es zeigen

Fig. 1 ein Blockschaltbild einer Bildschirmtextstation,

Fig. 2 eine schematische Darstellung einer Tastatur der Bildschirmtextstation,

Fig. 3 eine schematische Darstellung eines Speicherinhalts.

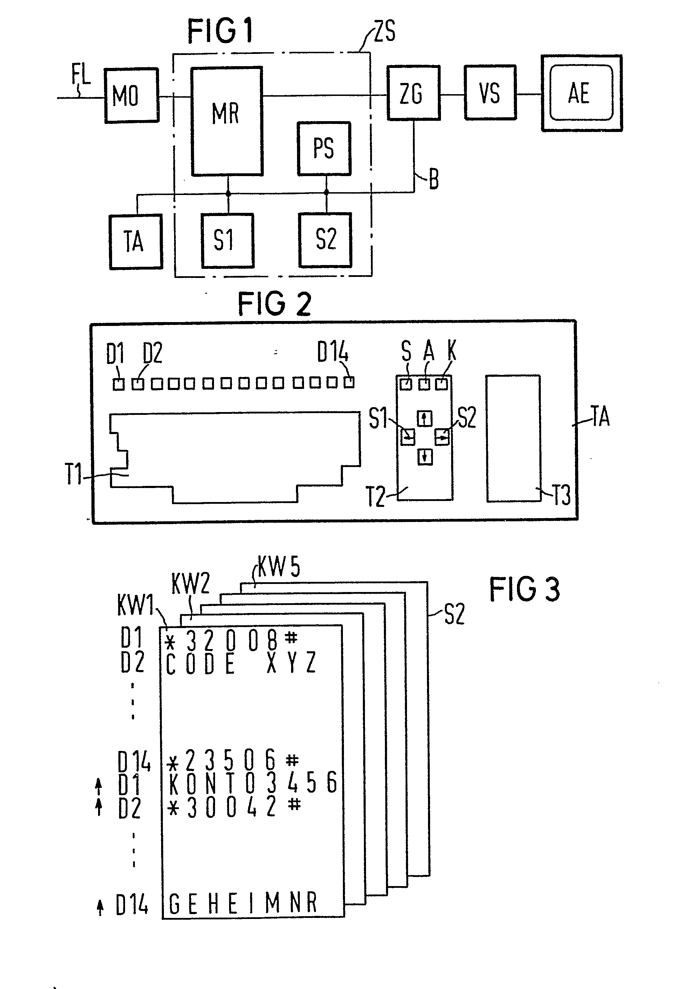

Das in Fig. 1 dargestellte Blockschaltbild der Bildschirmtextstation zeigt einen an einer Fernleitung FL angeschlossenen Modem MO, der mit einer Zentralsteuerung ZS verbunden ist. An der Zentralsteuerung ZS ist einerseits eine Tastatur TA mit alphanumerischen Tasten, Datentasten

**0158257**

und Steuertasten und andererseits über einen Zeichengenerator ZG und eine Videoschnittstelle VS eine Anzeigeeinheit AE angeschlossen.

Die Zentralsteuerung ZS besteht im wesentlichen aus einem Mikrorechner MR, der über einen Bus B mit einem Programmspeicher PS, mit einem Seitenspeicher S1 für Bildschirmtextseiten und einem Schreib/Lesespeicher S2 verbunden ist. Der Schreib/Lesespeicher S2 ist mit einer Pufferbatterie versehen, um nach dem Abschalten der Betriebsspannung den Inhalt zu erhalten.

Bei der Teilnahme am Dienst "Bildschirmtext" wird mittels der Tastatur TA und der Zentralsteuerung ZS über den Modem MO einer Verbindung zu einer Bildschirmtextzentrale hergestellt. Anschließend wird durch die Eingabe der entsprechenden Seitennummer über die alphanumerischen Tasten eine entsprechende Bildschirmtextseite von der Zentrale über die Fernleitung FL und den Modem MO zur Zentralsteuerung ZS übertragen und im Seitenspeicher S1 gespeichert. Über den Zeichengenerator ZG und die Videoschnittstelle VS erfolgt eine Anzeige der entsprechenden Bildschirmtextseite an der Anzeigeeinheit AE.

Falls, beispielsweise bei einer Fernbuchung eine Kontonummern eingegeben werden muß, kann diese ebenfalls mittels der alphanumerischen Tasten der Tastatur TA eingegeben werden. Es erweist sich jedoch als zweckmäßig, derartige Datenwörter in der Bildschirmtextstation zu speichern und nach einem entsprechenden Tastendruck aufzurufen. Um jedoch nicht jedem Benutzer der Bildschirmtextstation diese Datenwörter zugänglich zu machen, werden diese mittels eines Kennworts, das nur dem jeweiligen Benutzer bekannt ist, gesichert.

Die in Fig. 2 dargestellte Tastatur TA enthält 14 Datentasten D1 bis D14, die oberhalb alphanumerischer Tasten T1 angegeordnet sind. Weiterhin enthält die Tastatur zwei Blöcke T2 und T3 mit Steuertasten. Im Block T2 sind den Datentasten D1 bis D14 zugeordnete Tasten S, A und K vorgesehen, die zum Einspeichern, Anzeigen bzw. zum Löschen, Ändern und Wechseln des Kennworts vorgesehen sind.

Wenn eine berechtigte Person persönliche Datenwörter ausgeben will, gibt sie über die alphanumerischen Tasten T1 ein ihr zugeordnetes Kennwort ein. Der Mikrorechner MR vergleicht dieses Kennwort mit einem von mehreren im Speicher S2 speicherbaren Kennwörtern. Bei einer Übereinstimmung der beiden Kennwörter wird der Inhalt einer einem ersten Kennwort zugeordneten Ebene KW1 des Speichers S2 zur Ausgabe durch die Datentasten D1 bis D14 freigegeben. Wenn der Benutzer anschließend eine der Datentasten D1 bis D14 betätigt, werden die entsprechenden im Speicher S2 gespeicherten Datenwörter ausgegeben, an der Anzeigeeinheit AE angezeigt und über die Fernleitung FL übertragen. Diese Datenwörter sind beispielsweise Nummern von Bildschirmtextseiten, Codewörter, Kontonummern oder Geheimnummern. Die Datenwörter sind in zwei Ebenen durch die Datentasten D1 bis D14 abrufbar, wobei die zweite Ebene durch einen nach oben gerichteten Pfeil gekennzeichnet ist. Nach dem Betätigen einer Ebenenumschalttaste im Tastenfeld T1 wird die zweite Ebene adressiert und bei einem darauffolgenden Betätigen einer der Tasten D1 bis D14 werden die mit dem Pfeil gekennzeichneten Datenwörter ausgegeben.

In entsprechender Weise kann eine weitere Person ihr persönliches Kennwort eingeben, worauf dann den Datentasten D1 bis D14 die in der Speicherebene KW2 des Speichers S2

0158257

gespeicherten Datenwörter zugeordnet werden. Auf diese Weise werden beispielsweise im Speicher S2 fünf Speicherebenen KW1 bis KW5 vorgesehen, die fünf Kennwörtern zugeordnet sind, wobei in jeder Speicherebene bis zu 28 Datenwörter speicherbar sind, die mittels der 14 Datentasten und der Ebenenumschalttaste abrufbar sind.

Die Eingabe eines Datenworts erfolgt mittels der Taste S. In diesem Fall wird nach der Eingabe eines Kennworts und dem Betätigen der entsprechenden Datentaste D1 bis D14 das Datenwort mittels der Tasten T1 eingegeben. Nach dem Betätigen der Taste S wird dann das eingegebene Datenwort gespeichert und ist durch die entsprechende Datentaste D1 bis D14 wieder abrufbereit.

Nach der Eingabe eines Kennworts und dem Betätigen der Anzeigetaste A wird der Inhalt der dem Kennwort zugeordneten Speicherebene im Speicher S2 an der Anzeigeeinheit AE dargestellt. Die Darstellung kann im Datenfeld erfolgen, in dem normalerweise die Bildschirmtextseiten dargestellt werden. Aus Platzgründen ist es zu diesem Zweck denkbar, zunächst die den Datentasten D1 bis D14 ohne Betätigung der Ebenenumschalttaste zugeordneten Datenwörter darzustellen und anschließend nach einem Betätigen der Ebenenumschalttaste oder nach einem erneuten Betätigen der Anzeigetaste A die entsprechenden Wörter darzustellen. Es ist auch möglich, in einer zusätzlichen Anzeigezeile an der Anzeigeeinheit AE nach dem Betätigen der Anzeigetaste A und dem Betätigen einer entsprechenden Datentaste D1 bis D14 das dieser Datentaste zugeordnet Datenwort anzuzeigen. Die jeweils den vorhergehenden oder nachfolgenden Datentasten D1 bis D14 zugeordneten Datenwörter können dann durch Betätigen von Steuertasten S1 und S2 angezeigt werden. Diese Steuertasten S1 und S2 sind normalerweise für die Bewegung einer Schreibmarke an der Anzeigeeinheit AE in horizontaler Richtung vorgesehen.

Das jeweilige Kennwort kann anstelle der Tasten T1 auch mittels einer Steckkarte, die mit einem Magnetstreifen oder einem Halbleiterbaustein versehen ist, eingegeben werden. In diesem Fall ist es jedoch zweckmäßig, zusätzlich mittels der Tasten T1 eine der jeweils berechtigten Person zugeordnete Zeichenfolge einzugeben, die den Inhalt der Steckkarte erst dann freigibt, wenn die richtige Zuordnung zwischen der Steckkarte und dieser Zeichenfolge sichergestellt ist.

Beim Abschalten der Bildschirmtextstation und beim anschließenden Wiedereinschalten sind die Datentasten D1 bis D14 gesperrt und werden erst nach dem Wiedereingeben eines Kennworts freigegeben. Es ist auch möglich, nach einer Darstellung einer entsprechenden Seite zur Benutzerführung an der Anzeigeeinheit AE ein Zeichen einzugeben, durch das die Datentasten D1 bis D14 gesperrt werden. Auf diese Weise wird verhindert, daß eine anschließend mit der Bildschirmtextstation arbeitende Person Zugriff zu den Datenwörtern der vorangehenden Person hat. In entsprechender Weise können nach der Eingabe von anderen Zeichen die Kennwörter gelöscht oder geändert werden.

9 Patentansprüche

3 Figuren

0158257

Patentansprüche

1. Verfahren zum gesicherten Zugriff zu gespeicherten Datenwörtern, die in einem Gerät, insbesondere einer Bildschirmtextstation gespeichert sind, wobei das Gerät eine Tastatur, mindestens einen Speicher und eine Anzeigeeinheit enthält, d a d u r c h   g e k e n n z e i c h n e t ,   daß nach der Eingabe eines Kennworts mittels der Tastatur (TA) dieses mit mehreren im Gerät speicherbaren Kennwörtern verglichen wird, daß bei Übereinstimmung des eingegebenen Kennworts mit einem der gespeicherten Kennwörter eine Mehrzahl von diesem Kennwort zugeordneten Datenwörtern entsprechenden Datentasten (D1 bis D14) zugeordnet werden und daß nach dem Betätigen einer der Datentasten (D1 bis D14) das entsprechende Datenwort ausgegeben wird.

2. Verfahren nach Anspruch 1, d a d u r c h   g e k e n n z e i c h n e t ,   daß die jedem Kennwort zugeordneten Datenwörter in mehreren Ebenen den Datentasten (D1 bis D14) zugeordnet werden.

3. Verfahren nach Anspruch 2, d a d u r c h   g e k e n n z e i c h n e t ,   daß die jedem Kennwort zugeordneten Datenwörter in zwei Ebenen den Datentasten (D1 bis D14) zugeordnet werden und daß die Ebenen durch eine Ebenenumschalttaste an der Tastatur (TA) adressiert werden.

4. Verfahren nach einem der Ansprüche 1 bis 3, d a d u r c h   g e k e n n z e i c h n e t ,   daß die Eingabe des Kennworts mittels der Tastatur (TA) erfolgt.

5. Verfahren nach einem der Ansprüche 1 bis 3, d a - durch gekennzeichnet , daß die Eingabe des Kennworts mittels einer Steckkarte erfolgt, deren Inhalt durch die Eingabe einer persönlichen Zeichenfolge mittels der Tastatur (TA) freigegeben wird.

6. Verfahren nach einem der Ansprüche 1 bis 5, d a - d u r c h    g e k e n n z e i c h n e t ,    daß das Einspeichern eines Datenworts nach der Eingabe des Kennworts, nach dem Betätigen der entsprechenden Datentaste (D1 bis D14), nach der Eingabe des Datenworts mittels der Tastatur (TA) und dem Betätigen einer Speichertaste (S) erfolgt.

7. Verfahren nach einem der Ansprüche 1 bis 6, d a - d u r c h    g e k e n n z e i c h n e t ,    daß die Anzeige der Datenwörter nach der Eingabe des Kennworts und nach dem Betätigen einer Anzeigetaste (A) im Datenfeld der Anzeigeeinheit (AE) erfolgt.

8. Verfahren nach einem der Ansprüche 1 bis 6, d a - d u r c h    g e k e n n z e i c h n e t ,    daß die Anzeige der Datenwörter nach der Eingabe des Kennworts und nach dem Betätigen einer Anzeigetaste (A) und einer entsprechenden Datentaste (D1 bis D14) in einer zusätzlichen Anzeigezeile an der Anzeigeeinheit (AE) erfolgt.

9. Verfahren nach Anspruch 8, d a d u r c h    g e - k e n n z e i c h n e t ,    daß die den jeweils benachbarten Datentasten (D1 bis D14) zugeordneten Datenwörter nach dem Betätigen von Steuertasten (S1, S2) erfolgt, die den Bewegungen einer Schreibmarke an der Anzeigeeinheit (AE) in horizontaler Richtung zugeordnet sind.

## FIG 1

FL

MO — MR — ZG — VS — AE

ZS

PS

B

TA   S1   S2

## FIG 2

D1 D2 ... D14

S A K

S1   S2

T1

T2   T3

TA

## FIG 3

KW1 KW2 KW5

S2

D1  * 3 2 0 0 8 #

D2  C O D E   X Y Z

D14  * 2 3 5 0 6 #

D1  K O N T O 3 4 5 6

D2  * 3 0 0 4 2 #

D14  G E H E I M N R

**0158257**

Nummer der Anmeldung

# EUROPÄISCHER RECHERCHENBERICHT

Europäisches Patentamt

EP 85 10 3913

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | IBM TECHNICAL DISCLOSURE BULLETIN, Band 16, Nr. 7, Dezember 1973, Seiten 2312-2314, New York, US; G.F. NIELSEN: "Remote terminal - computer communication security system" * Seite 2313, Zeilen 19-39 * | 1,4 | G 06 F 12/14 |
| A | WO-A-8 301 848 (DEVCHOUDHURY, NCR) * Seite 3, Zeile 14 - Seite 4, Zeile 37 * | 1 | |
| A | DE-A-2 842 777 (KOECK) * Seite 7, Zeile 21 - Seite 9, Zeile 4 * | 1,5 | |
| A | DE-A-2 704 843 (HILBERG) | | RECHERCHIERTE SACHGEBIETE (Int. Cl.4) G 06 F 12/14 |

Der vorliegende Recherchenbericht wurde für alle Patentansprüche erstellt.

| Recherchenort DEN HAAG | Abschlußdatum der Recherche 28-06-1985 | Prüfer LEPEE W. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82